# NEW EUROPEAN PATENT SPECIFICATION

(11) **EP 2 484 500 B2**
(45) Date of publication and mention of the opposition decision: **25.03.2020**
(45) Mention of the grant of the patent: 27.01.2016
(21) Application number: 12153638.7
(22) Date of filing: 02.02.2012
(51) Int. Cl.: B27B 5/065, B23D 47/02

(54) **Panel saw machine**
Plattenaufteilsäge
Machine de sciage à panneau

(30) Priority: 03.02.2011 IT BO20110046
(43) Date of publication of application: 08.08.2012
(73) Proprietor: GIBEN INTERNATIONAL S.p.A., 40065 Pianoro (Bologna) (IT)
(72) Inventor: Benuzzi, Piergiorgio, 40141 Bologna (IT)
(74) Representative: Modiano, Micaela Nadia

(56) References cited:
- EP-A1- 1 150 811
- EP-A1- 1 231 008
- EP-A1- 2 608 917
- WO-A1-02/26452
- WO-A1-2012/025632
- WO-A2-2010/001367
- AT-A1- 507 327
- DE-A1- 2 710 148
- DE-A1-102005 007 489
- DE-A1-102009 033 649
- DE-U1- 20 221 566
- JP-A- 11 010 601
- Ion Boldea and Syed A . Nasar: "Chapter 20. Linear Induction Motors" In: "The Induction Machines Design Handbook", 29 November 2001 (2001-11-29), CRC Press, XP002657308, ISBN: 978-0-8493-0004-2 vol. 6, pages 1-6, * page 1 - page 2 * * page 3, paragraph 2 * * Merits *

## Description

This invention relates to a panel saw machine for cutting wooden panels or the like, such as, for example, slabs of plastic materials, slabs of non-ferrous metal, or slabs of cement or plasterboard. A panel saw machine according to the preamble of claim 1 is known from DE 10 2009033649 A1. Panel saw machines of known type are used to cut panels of various sizes, usually placed one over the other in stacks of predetermined height.

These panel saw machines essentially comprise a horizontal work table to support the stacks of panels to be cut; a panel movement unit or pusher, movable along a horizontal direction X, for moving the panels along the work table; and a rotary blade cutting device or unit for cutting the panel or the stack of panels along a cutting direction Y transversal to the direction X.

Depending on the height of the stack of panels to be cut, that is to say, depending substantially on the type of machine, the cutting unit may comprise a main cutting blade and a scoring tool.

In prior art solutions, for feeding the cutting unit, panel saw machines comprise, for example, an endless transmission belt trained around a drive pulley and a driven pulley and around the cutting unit itself in order to drive the cutting unit along the cutting direction Y.

In prior art solutions, the pusher comprises a push beam which extends along the axis Y and is supported and guided at the ends of it, for example outside the horizontal work table.

For moving the pusher, prior art panel saw machines comprise, for example, an electric motor for driving a pair of pinions located at the ends of the beam and each meshing with a respective rack which extends along the axis X. Usually, there is also a shaft for connecting the ends of the beam, acting as a torsion bar to keep the ends of the beam aligned as the pusher is fed forward. Generally speaking, therefore, the drive systems by which the cutting unit and/or the pusher are moved comprise motion transmission systems which, mechanically, are relatively complicated and cumbersome, whether they are defined by flexible belts or the like and pulleys or other mechanical parts which mesh with each other.

One drawback linked to transmission systems of this kind is that they necessarily involve mesh clearances which, combined with their own weight, lead to an appreciable loss of performance, especially in terms of speed and acceleration of the units they drive.

The mechanical clearances inevitable in prior art transmission systems slow down the response of the driven unit, with a negative effect both on its acceleration and speed of travel.

These disadvantages are particularly noticeable during the idle stroke of the cutting unit and/or of the panel movement unit, the idle strokes being normally performed to return the pusher and the cutting unit to their respective rest or loading positions at the end of a working cycle or a part of it.

These clearances also cause difficulties in the performance of particularly precise operations, such as, for example, scoring cuts.

In the case of the pusher, yet another mechanical complication derives from the need to keep the ends of the push beam in line with each other, which, as mentioned above, calls for the presence of the shaft acting as a torsion bar.

Another kind of sheet tooling machine is disclosed in document EP1231008A1.

The tooling machine comprises movable sheet-holding elements for moving and retaining the sheet during the machining.

The sheet-holding elements are fitted on a conveyor element, for example in the form of a linear motor, which makes each element move along a predetermined track.

In this context, the main purpose of this invention is to provide a panel saw machine that is free of the above mentioned disadvantages.

One aim of this invention is to provide a panel saw machine which is mechanically simpler than prior art solutions, in particular as regards the movement of the cutting unit and/or of the pusher. Another aim of the invention is to provide a panel saw machine which is more efficient than the prior art solutions in terms of acceleration and speed of the cutting unit and/or of the panel movement unit.

A yet further aim of the invention is to provide a panel saw machine which is more precise in positioning its moving parts in order to improve its performance.

The purpose and aims specified above are substantially achieved by a panel saw machine as described in one or more of the appended claims. Further features and advantages of the invention are more apparent in the approximate and hence nonlimiting description of a preferred, non-exclusive embodiment of a panel saw machine, illustrated in the accompanying drawings in which:
- Figure 1 is a schematic plan view from above of a panel saw machine according to this invention;

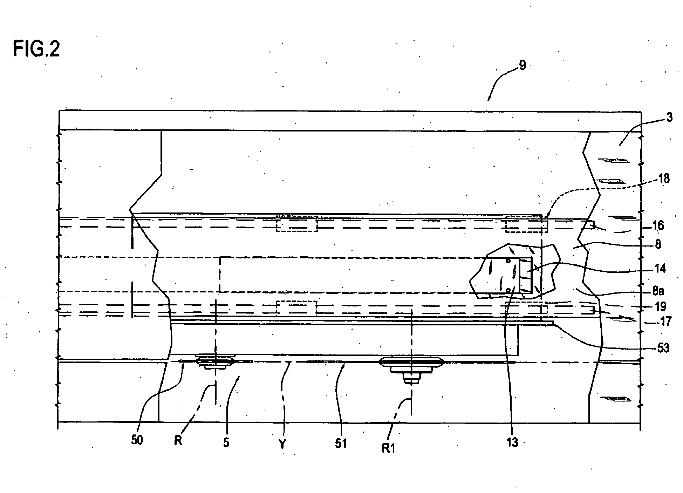

- Figure 2 illustrates the panel saw machine of Figure 1 in a schematic interrupted plan view from above and with some parts cut away for clarity;
- Figure 3 illustrates the panel saw machine of the preceding figures in a schematic side view, suitably interrupted and with some parts cut away for clarity;

- Figure 4 shows the panel saw machine of Figure 1 in a schematic front view with some parts cut away for clarity.
- Figure 5 illustrates the panel saw machine of the preceding figures in a schematic front view, suitably interrupted and with some parts cut away for clarity.

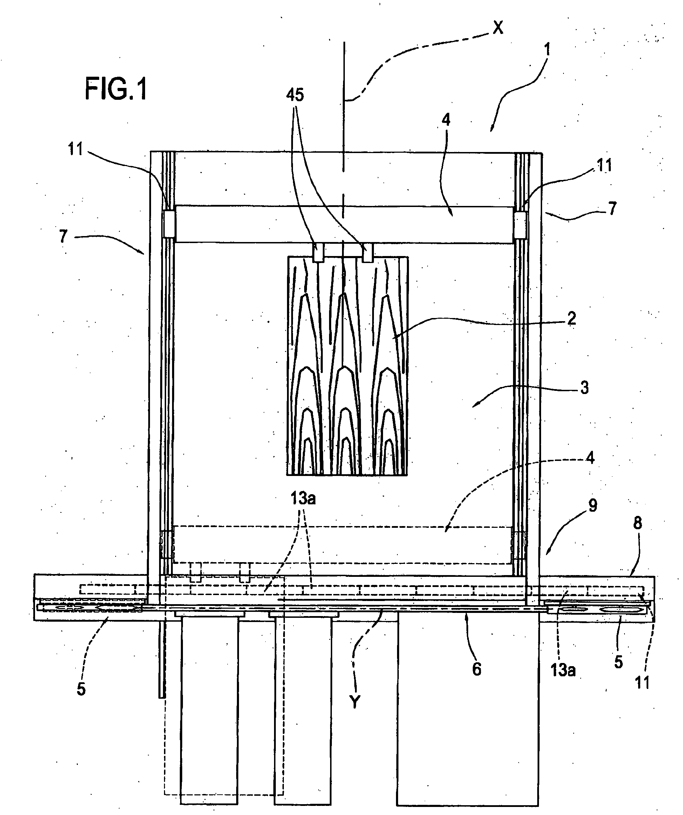

With reference to the accompanying drawings, in particular Figure 1, the numeral 1 denotes a panel saw machine or cutting machine for panels 2 according to this invention.

Preferably, the panel saw machine 1 is designed to cut wooden panels or the like, such as, for example, slabs of plastic materials, slabs of non-ferrous metal, or slabs of cement or plasterboard. The panel saw machine 1 essentially comprises a horizontal work table 3 to support the panels 2 and a movement unit 4 for moving the panels 2 on the work table 3, and a cutting unit 5 for sawing the panels 2.

The movement unit 4 and the cutting unit 5, of substantially known type and will therefore be described only insofar as is necessary to understand this invention.

The cutting unit 5 is movable between a first operating position and a second operating position, illustrated for example by the dashed line in Figure 1, along a cutting direction Y to cut the panels and define a cutting line 6.

The panel 2 movement unit 4 is movable between a first operating position, illustrated in Figure 1, and a second operating position, illustrated by the dashed line in Figure 1, along a feed direction X transversal to the cutting direction Y, in order to feed the panels 2 to the cutting line 6.

As illustrated, the cutting unit 5 is placed alongside the work table 3, that is, the cutting line 6 is defined by one end of the work table 3. The unit 4 is movable along the direction X towards and away from the cutting line 6 depending on the operations to be carried out on the panels 2.

The machine 1 comprises a frame 7 for mounting the movement unit 4 in such a way as to support the unit 4 while allowing it to perform the aforementioned movements.

The machine 1 comprises a base 8 for the cutting unit 5.

In the preferred embodiment illustrated, the base 8 extends principally along the direction Y and the cutting unit 5 is movable between the above mentioned operating positions along the base 8.

The frame 7 and the base 8 define, in the embodiment illustrated by way of example, a framework 9 for the machine 1.

The panel saw machine 1 comprises drive means 10 for moving the cutting unit 5 and the panel movement unit 4.

In the embodiment illustrated, the drive means 10 allow the movement unit 4 to be fed along the direction X towards and away from the cutting line 6.

In the embodiment illustrated, the drive means 10 allow the cutting unit 5 to be moved along the cutting line 6. As is known, the movements of the cutting unit 5 comprises forward, cutting strokes and return strokes along the direction Y.

In other words, the drive means 10 are adapted to move the cutting unit 5 between the respective first and second operating positions and to move the movement unit 4 between the respective first and second operating positions.

By way of an example, the first operating position of the movement unit 4 corresponds to a position away from the cutting line 6, while the second operating position of the unit 4 corresponds to a position close to the cutting line 6.

The first operating position of the cutting unit 5 is defined, for example, as the starting reference of the cutting line 6 and the second operating position of the cutting unit 5 is defined as the ending reference of the cutting line 6.

According to this invention, the drive means 10 comprise at least one linear motor 12. As is mentioned above and is known, the movements both of the cutting unit 5 and of the panel 2 movement unit 4 are substantially linear. The use of linear motors, of *per* se known type and therefore not described in detail, for moving the cutting unit 5, makes the means and systems normally present for feeding the cutting unit much simpler than in prior art panel saw machines.

In the preferred embodiment illustrated by way of an example, the panel saw machine 1, as will become clearer as this description continues, comprises a set of three linear motors: the first for moving the cutting unit 5 along the cutting direction Y and the others for moving the panel movement unit 4 along the feed direction X.

Advantageously, in an alternative embodiment not illustrated, the panel saw machine 1 comprises a linear motor for driving the cutting unit 5, while the panel movement unit 4 is driven in another known manner.

Alternatively, in a further example not according to the invention not illustrated, the panel saw machine 1 comprises at least one linear motor for driving the panel 2 movement unit 4.

In the latter example, the cutting unit 5 is driven along the cutting line 6 through the agency of different transmission systems not described here.

In a yet further embodiment not illustrated, the panel saw machine 1 comprises a pair of parallel linear motors for driving the panel movement unit. Looking in more detail at the panel saw machine 1 illustrated by way of example in the accompanying drawings, it may be observed that the machine comprises a linear motor 12 for driving the cutting unit 5.

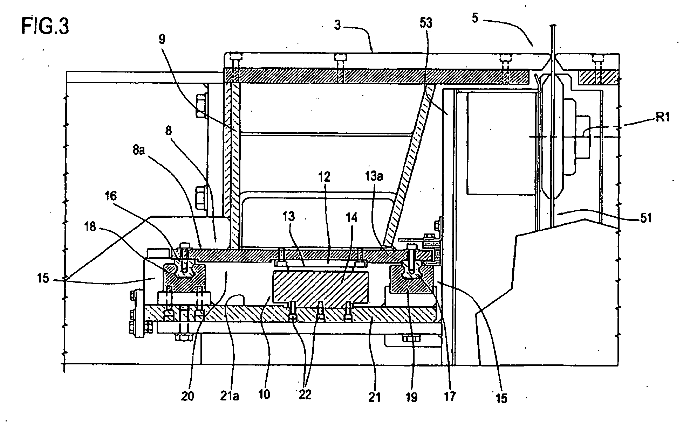

With reference in particular to Figure 3, it may be observed that according to the invention the motor 12 comprises a stator 13, extending along the cutting direction Y, integral with the framework 9 of the machine 1, and a corresponding mover 14 integral with the cutting unit 5. More specifically, the stator 13 is integral with the base 8.

In the embodiment illustrated in particular in Figure 1, the stator 13 is defined by a plurality of permanent magnets 13a.

The magnets 13a are aligned along the cutting direction Y to define what is known in the jargon of the trade as a *"magnet track".*

Advantageously, the magnet track is of a modular type, since each magnet is fixed to the framework 9 independently.

More specifically, as illustrated, the magnets 13a are mounted as one with the base 8 of the machine 1.

As illustrated, the machine 1 comprises support and guide means 15 for the cutting unit 5.

The means 15 operate between the base 8 and the cutting unit 5 and comprise a first and a second prismatic guide 16, 17 extending along the cutting direction Y.

In the embodiment, the base 8 has a horizontal portion 8a which the guides 16 and 17 are fixed to.

Generally speaking, the guides 16 and 17 are integral with the base 8, in particular, as mentioned, with a horizontal portion thereof.

It should be noted that in embodiments not illustrated and not part of the claimed invention, the guides 16, 17 are integral with a vertical portion of the base and are vertically superposed over each other, that is to say, one above and the other below.

In this solution, the cutting unit 5 is also structured differently and has a substantially vertical plate by which it is coupled to the guides 16, 17.

The support and guide means 15 comprise a first and a second runner 18 and 19 which are slidably connected to the first guide 16 and to the second guide 17, respectively.

The runners 18 and 19 are fixed to the cutting unit 5 and allow it to slide relative to the base 8. Looking in more detail at the cutting unit 5, it may be observed that the unit 5 comprises a carriage 20 by which the unit 5 is supported and associated with the framework 9, in particular with the base 8, of the machine 1.

Schematically, the cutting unit 5 illustrated by way of example also comprises a scoring blade 50 and a cutting blade 51, rotatable about respective axes of rotation R, R1 parallel to the panel feed direction X. The blades 50 and 51 are supported and transported by the carriage 20 and are suitably driven by a respective drive motor system 52 which is not further described because it does not form part of this invention.

In the embodiment, the carriage 20 comprises a horizontal plate 21 extending principally along the feed and cutting directions X and Y.

Advantageously, the runners 18 and 19 are integral with the plate 21, and are preferably mounted on a large face 21a of the plate 21.

In other words, the support and guide system 15 for the cutting unit 5 operates between the large face 21a and the base 8.

As illustrated, the mover 14 is integral with the carriage 20.

More precisely, the mover 14 is integral with the plate 21 in such a way that it faces the corresponding stator 13 to define the linear motor 12.

In the preferred embodiment illustrated, the mover 14 is fixed, for example, by bolts 22, to the large face 21a of the plate 21.

It should be noted that the mover 14 is preferably positioned between the runners 18, 19 in such a way that the barycentre of the cutting unit 5 is centred relative to the guides 16, 17. Advantageously, the load supported by the guides 16, 17 is divided substantially equally and, moreover, the torques applied to the guides 16, 17 are reduced.

In the embodiment illustrated, the cutting unit 5 is hung to the base 8 by the runners 18, 19 and the guides 16, 17.

It is important to note that, as is known, a force of magnetic attraction is produced between the mover 14 and the stator 13, which is defined, as mentioned above, by a plurality of magnets 13a.

In the preferred embodiment illustrated, the force of magnetic attraction between the stator 13 and the mover 14 is subtracted from the weight force created by the mass of the cutting unit 5 bearing down on the guides 16, 17.

The preferred assembly therefore allows the support and guide system 15 of the cutting unit 5 to be optimally sized since it is not in practice subjected to the full weight of the cutting unit 5 itself.

It should be noted that in the embodiment illustrated by way of example, with reference in particular to Figure 3, the cutting unit 5 comprises a vertical plate 53 for supporting the blades 50, 51.

The plate 53 is supported by the plate 21 and preferably forms a single block therewith.

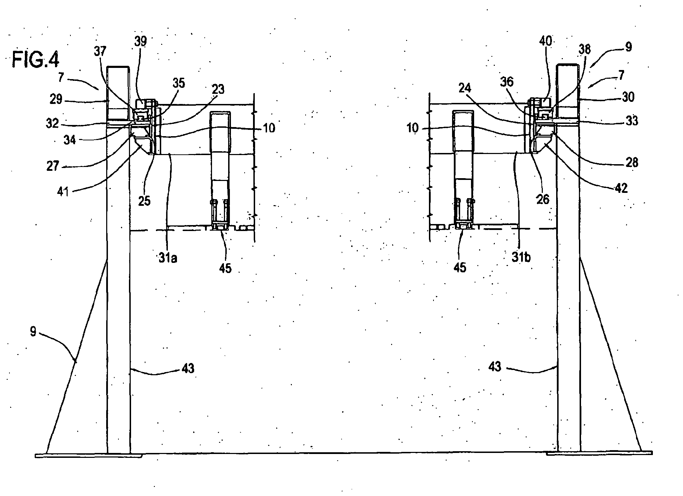

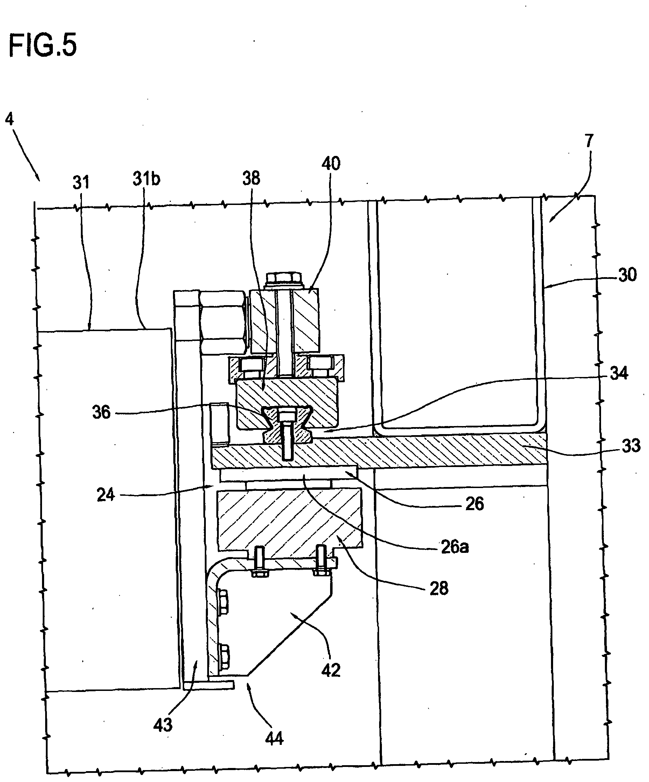

With reference in particular to Figures 4 and 5, it may be observed that in the preferred embodiment illustrated by way of example, the panel saw machine 1 comprises, as mentioned above, a second and a third linear motor 23, 24 for driving the movement unit 4. The motors 23 and 24 are of substantially known type and therefore are described only insofar as necessary to the understanding of this invention.

The motors 23 and 24 each comprise a respective stator 25 and 26 which extends along the feed direction X.

The stators 25 and 26 are integral with the framework 9 of the machine 1, and in particular with the frame 7.

Preferably, the stators 25 and 26 comprise corresponding magnets to form a modular structure. By way of example, the reference 26a in Figure 5 denotes a module of the structure.

The magnets defining the stator 25 are aligned along the feed direction X to define a corresponding magnet track.

Similarly, the magnets 26a defining the stator 26 are aligned along the feed direction X to define a corresponding magnet track.

Advantageously, therefore, these magnet tracks are of a modular type since each magnet is fixed to the framework 9 independently.

More specifically, the frame 7 comprises flanks 29, 30 which are parallel to each other and the stators 25, 26 are supported by the corresponding flanks 29, 30. As illustrated, the frame 7 comprises feet 43 for supporting the flanks 29, 30.

The motors 23 and 24 each comprise a respective mover 27, 28 facing the corresponding stator 25, 26 and integral with the movement unit 4.

In the embodiment illustrated by way of example, the frame 7 comprises, as mentioned above, the two opposed flanks 29, 30 extending along the feed direction to support the movement unit 4.

More specifically, the movement unit 4 comprises a push beam 31 which extends principally along the direction Y, is supported by the frame 7 and is movable relative thereto.

In the configuration illustrated by way of example, with reference in particular to Figures 1 and 4, the movement unit 4 comprises pickup means 45, for example grippers, associated with the beam 31 in a substantially known manner not described here. Preferably, the flanks 29, 30 extend at the sides of the panel 2 work table 3 and the push beam 31 is supported at the ends of it 31a, 31b by the flanks 29, 30.

Advantageously, as will become clearer as this description continues, the movers 27, 28 are each associated with the beam 31 at a respective end 31a, 31b.

Each of the stators 25, 26 faces the respective mover 27, 28 and is supported as one with the respective flank 29, 30.

Figure 5 illustrates in detail the coupling of the movement unit 4 to the frame 7, showing it in particular from the side of the flank 30.

The frame 7 comprises a first and a second bracket 32, 33 projecting from the flanks 29, 30, respectively, inwards towards the panel 2 work table 3.

The brackets 32 and 33 extend principally along the panel 2 feed direction X and define, as described in more detail below, a support for the panel movement unit 4.

As illustrated, the stator 25 is integral with the bracket 32 and the stator 26 is integral with the bracket 33.

In the preferred embodiment illustrated, the stator 25 is integral with the underside of the bracket 32. Preferably, the stator 26 is integral with the underside of the bracket 33.

The machine 1 comprises support and guide means 34 operating between the frame 7 and the movement unit 4.

More specifically, the support and guide means 34 operate between the push beam 31 and the flanks 29, 30.

Still more preferably, the support and guide means 34 operate between the bracket 32 and the beam 31 and between the bracket 33 and the beam 31.

Looking in more detail at the preferred embodiment illustrated by way of example, it may be observed that the support and guide means 34 comprise a prismatic guide 35 integral with the flank 29, and more specifically, with the bracket 32.

The guide 35 extends along the feed direction X and is associated with the bracket 32 on the side opposite the stator 25.

The support and guide means 34 comprise a further prismatic guide 36 integral with the flank 30, and more specifically, with the bracket 33.

The guide 36 extends along the feed direction X and is associated with the bracket 33 on the side opposite the stator 26.

The support and guide means 34 comprise a runner 37 integral with the beam 31 and slidably connected with the guide 35.

The support and guide means 34 comprise a runner 38 integral with the beam 31 and slidably connected with the guide 36.

In the preferred embodiment illustrated, the movement unit 4 comprises, at the end 31a of the beam 31, a support 39 which projects from the beam 31 along the cutting direction Y until it is positioned to face the corresponding bracket 32. The runner 37 is preferably integral with the support 39 and engaged with the corresponding guide 35.

At the end 31b of the beam 31, the movement unit 4 comprises a support 40 which projects from the beam 31 along the cutting direction Y until it is positioned to face the corresponding bracket 33. The runner 38 is preferably integral with the support 40 and engaged with the corresponding guide 36.

Thus, the beam 31, and hence the movement unit 4, is preferably supported by and rests on the brackets 32, 33 through the agency of the support and guide means 34 of the unit 4 itself.

Looking in more detail at the assembly of the mover 27 on the panel movement unit 4, it may be observed that the unit 4 comprises a supporting plate 41 which extends along the direction Y from the end 31a of the beam 31.

The plate 41 is positioned on the side opposite the support 39 with respect to the bracket 32 in such a way as to face the latter on the side of the stator 25.

The mover 27 is fixed to the plate 41 in such a way that it faces the corresponding stator 25 to define the linear motor 23.

The unit 4 comprises a supporting plate 42 which extends along the direction Y from the end 31b of the beam 31.

The plate 42 is positioned on the side opposite the support 40 with respect to the bracket 33 in such a way as to face the latter on the side of the stator 26.

The mover 28 is fixed to the plate 42 in such a way that it faces the corresponding stator 26 to define the linear motor 24.

Advantageously, a force of magnetic attraction opposite in sign to the weight force created by the movement unit 4 and bearing down on the guides 35 and 36 is established between the stator 25 and the corresponding mover 27 and between the stator 26 and the corresponding mover 28.

In the preferred embodiment illustrated, therefore, the positioning of the linear motors 23, 24 makes it possible to lighten the weight bearing down on the prismatic guides 35, 36.

In other words, the linear motors 23, 24 are positioned in such a way that the attraction between the stators 25, 26 and the corresponding movers 27, 28 relieves part of the weight bearing down on the guides 35, 36.

With reference in particular to Figure 5, it may be observed that the support 40 and the plate 42 are both integral with a plate 43 and define with the latter a fastening unit 44 operating between the beam 31 and the flank 30.

The unit 44 is engaged loosely on the end 31b of the beam 31 and is movable relative thereto along the direction Y.

In practice, the unit 44 is mounted with clearance along Y on the beam 31 to compensate for possible errors in the parallelism of the guides 35, 36. Advantageously, in order to maintain the synchronous movement of the ends of the beam 31, since the movement unit 4 is power driven by a pair of parallel linear motors, it is sufficient to create an electric shaft via the electronic control of the two motors 23, 24, this shaft not being described in detail here since it is of known type. Compared to prior art solutions, the systems for the transmission of motion to the cutting unit and to the panel movement unit are much simpler.

The masses of both the cutting unit and the pushing unit are reduced, thus significantly enhancing performance in terms of speed and acceleration of the respective units.

Moreover, with the same structure, reducing the overall weight increases the rigidity of the structure.

The masses are therefore reduced, mechanical play is substantially absent and thus the response of the panel saw machine according to the invention is immediate and with much higher return and positioning speeds than prior art solutions.

The linear motors also allow extremely precise positioning of the respective units, which is particularly advantageous when making scoring cuts.

## Claims

1. A panel saw machine for cutting panels (2) comprising a work table (3) for supporting the panels (2), a framework (7, 8, 9), a panel (2) movement unit (4) mounted on the framework (7, 8, 9) and movable, for moving the panels (2) on the work table (3), between a first operating position and a second operating position along a feed direction (X), a cutting unit (5) placed alongside the work table (3) and mounted on the framework (7, 8, 9), movable, for cutting the panels (2), between a first operating position and a second operating position along a cutting direction (Y) transversal to the feed direction (X), drive means (10) for moving the cutting unit (5) between the respective first and second operating positions and for moving the movement unit (4) between the respective first and second operating positions, the panel saw machine being **characterized in that** the drive means (10) comprise at least one linear motor (12) for moving the cutting unit (5) between the first and second operating positions along the cutting direction (Y), the linear motor (12) comprising a stator (13) integral with the framework (7, 8, 9) and extending along the cutting direction (Y) and a corresponding mover (14) integral with the cutting unit (5), wherein the stator (13) is defined by a plurality of permanent magnets (13a), wherein the magnets (13a) are aligned along the cutting direction (Y) to define a magnet track, wherein the panel saw machine further comprises support and guide means (15) operating between the framework (7, 8, 9) and the cutting unit (5), the cutting unit (5) being hung from the framework (7, 8, 9) by the support and guide means (15), the support and guide means (15) comprising at least one prismatic guide (16, 17) extending along the cutting direction (Y), a runner (18, 19) integral with the cutting unit and engaged with the prismatic guide (16, 17), a second prismatic guide (16, 17) parallel to the first prismatic guide (16, 17), and a second runner (18, 19) integral with the cutting unit (5) and engaged with the second prismatic guide (16, 17), the mover (14) being positioned between the first and the second runner (18, 19), the cutting unit (5) comprises a carriage (20) movable along the cutting direction (Y) and comprising a horizontal plate (21) having a large face (21a) extending principally along the feed direction (X) and the cutting direction (Y), the support and guide means (15) operating between the large face (21a) and the framework (7, 8, 9), the mover (14) being integral with the carriage (20).

2. The panel saw machine according to claim 1, **characterized in that** it comprises at least a second linear motor (23, 24) for moving the movement unit (4) between the first and second operating positions along the feed direction (X), the second linear motor (23, 24) comprising a second stator (25. 26) integral with the framework (7, 8, 9) and extending along the feed direction (X), and a corresponding second mover (27, 28) integral with the movement unit (4).

3. The panel saw machine according to claim 2, **characterized in that** the drive means (10) comprise at least a third linear motor (23, 24) comprising a third stator (25, 26), integral with the framework (7, 8, 9) and extending along the feed direction (X), and a corresponding third mover (27, 28) integral with the movement unit (4) and adapted to move the movement unit (4).

4. The panel saw machine according to claim 3, **characterized in that** the framework (7, 8, 9) comprises at least a first and a second flank (29, 30) which are parallel to each other and which extend along the feed direction (X), the movement unit (4) comprising a beam (31) supported by the first and second flanks (29, 30), the second linear motor (23, 24) operating between the first flank (29, 30) and the beam (31), the second stator (26, 27) being integral with the first flank (29, 30) and the second mover (27, 28) being integral with the beam (31), the third linear motor (23, 24) operating between the second flank (29, 30) and the beam (31), the third stator (25, 26) being integral with the second flank (29, 30) and the third mover (27, 28) being integral with the beam (31).

5. The panel saw machine according to claim 4, **characterized in that** the framework (7, 8, 9) comprises at least a first and a second flank (29, 30) parallel to and facing each other and extending along the feed direction (X), a first and a second bracket (32, 33) projecting from the first flank (29, 30) and from the second flank (29, 30), respectively, and extending along the feed direction (X), the movement unit (4) comprising a beam (31) supported by the first and second brackets (32, 33), the second linear motor (23, 24) operating between the first bracket (32, 33) and the beam (31), the second stator (25, 26) being integral with the first bracket (32, 33) and the second mover (27, 28) being integral with the beam (31), the third linear motor (23, 24) operating between the second bracket (32, 33) and the beam (31), the third stator (25, 26) being integral with the second bracket (32, 33) and the third mover (27, 28) being integral with the beam (31).

6. The panel saw machine according to claim 5, **characterized in that** it comprises second support and guide means (34) operating between the first and second brackets (32, 33) and the movement unit (4), the second support and guide means (34) comprising a third prismatic guide (35, 36), extending along the feed direction (X) and a third runner (37, 38) integral with the beam (31) and engaged with the third prismatic guide (35, 36), the third guide (35, 36) and the second stator (25, 26) being supported by the first bracket (32, 33), the second support and guide means (34) comprising a fourth prismatic guide (35, 36), extending along the feed direction (X) and a fourth runner (37, 38) integral with the beam (31) and engaged with the fourth prismatic guide (35, 36), the fourth guide (35, 36) and the third stator (25, 26) being supported by the second bracket (32, 33).

7. The panel saw machine according to claim 6, **characterized in that** the third prismatic guide (35, 36) and the second stator (25, 26) are positioned on opposite sides of the first bracket (32, 33) and **in that** the fourth prismatic guide (35, 36) and the third stator (25, 26) are positioned on opposite sides relative to the second bracket (32, 33).

8. The panel saw machine according to claim 7, **characterized in that** the movement unit (4) is supported by, and rests on, the third and fourth guides (35, 36).

## Patentansprüche

1. Plattenaufteilsäge zum Sägen von Platten (2), umfassend einen Arbeitstisch (3) zum Halten der Platten (2), einen Rahmen (7, 8, 9), ein Aggregat zum Fördern (4) der Platten (2), das am Rahmen (7, 8, 9) montiert und verfahrbar ist, um die Platten (2) auf dem Arbeitstisch (3) zwischen einer ersten Betriebsposition und einer zweiten Betriebsposition entlang einer Zuführungsrichtung (X) zu fördern, ein Sägeaggregat (5), das entlang des Arbeitstischs (3) platziert und am Rahmen (7, 8, 9) montiert ist, verfahrbar zum Sägen der Platten (2) zwischen einer ersten Betriebsposition und einer zweiten Betriebsposition entlang einer Sägerichtung (Y), die quer zur Zuführungsrichtung (X) verläuft, Antriebsmittel (10) zum Verfahren des Sägeaggregats (5) zwischen der jeweiligen ersten und der zweiten Betriebsposition und zum Verfahren des Förderaggregats (4) zwischen der jeweiligen ersten und der zweiten Betriebsposition, wobei die Plattenaufteilsäge **dadurch gekennzeichnet ist, dass** die Antriebsmittel (10) mindestens einen Linearmotor (12) umfassen, um das Sägeaggregat (5) zwischen der ersten und der zweiten Betriebsposition entlang der Sägerichtung (Y) zu verfahren, wobei der Linearmotor (12) einen Stator (13) umfasst, der fest mit dem Rahmen (7, 8, 9) verbunden ist und sich entlang der Sägerichtung (Y) erstreckt, sowie einen entsprechenden Läufer (14), der fest mit dem Sägeaggregat (5) verbunden ist, wobei der Stator (13) durch eine Vielzahl von Permanentmagenten (13a) definiert ist, wobei die Magneten (13a) entlang der Sägerichtung (Y) ausgerichtet sind, um eine Mangnetspur zu definieren, wobei die Plattenaufteilsäge ferner Halterungs- und Führungsmittel (15) umfasst, die zwischen dem Rahmen (7, 8, 9) und dem Sägeaggregat (5) arbeiten, wobei das Sägeaggregat (5) durch die Halterungs- und Führungsmittel (15) vom Rahmen (7, 8, 9) gehalten wird, wobei die Halterungs- und Führungsmittel (15) mindestens eine prismatische Führung (16, 17) umfassen, die sich entlang der Sägerichtung (Y) erstreckt, eine Gleitkufe (18, 19), die fest mit dem Sägeaggregat verbunden und mit der prismatischen Führung (16, 17) im Eingriff ist, eine zweite prismatische Führung (16, 17), die parallel zur ersten prismatischen Führung (16, 17) verläuft, und eine zweite Gleitkufe (18, 19), die fest mit dem Sägeaggregat (5) verbunden und im Eingriff mit der zweiten prismatischen Führung (16, 17) ist, wobei der Läufer (14) zwischen der ersten und der zweiten Gleitkufe (18, 19) positioniert ist, und das Sägeaggregat (5) einen Wagen (20) umfasst, der entlang der Sägerichtung (Y) verfahrbar ist, und umfassend eine horizontale Platte (21), aufweisend eine breite Seite (21a), die sich vorwiegend entlang der Zuführungsrichtung (X) und der Sägerichtung (Y) erstreckt, wobei die Halterungs- und Führungsmittel (15) zwischen der breiten Seite (21a) und dem Rahmen (7, 8, 9) arbeiten und der Läufer (14) fest mit dem Wagen (20) verbunden ist.

2. Plattenaufteilsäge nach Anspruch 1, **dadurch gekennzeichnet, dass** sie mindestens einen zweiten Linearmotor (23, 24) zum Verfahren des Förderaggregats (4) zwischen der ersten und der zweiten Betriebsposition entlang der Zuführungsrichtung (X) umfasst, wobei der zweite Linearmotor (23, 24) einen zweiten Stator (25, 26) umfasst, der fest mit dem Rahmen (7, 8, 9) verbunden ist und sich entlang der Zuführungsrichtung (X) erstreckt, und einen entsprechenden zweiten Läufer (27, 28), der fest mit dem Förderaggregat (4) verbunden ist.

3. Plattenaufteilsäge nach Anspruch 2, **dadurch gekennzeichnet, dass** die Antriebsmittel (10) mindestens einen dritten Linearmotor (23, 24) umfassen, umfassend einen dritten Stator (25, 26), der fest mit dem Rahmen (7, 8, 9) verbunden ist und sich entlang der Zuführungsrichtung (X) erstreckt, und einen entsprechenden dritten Läufer (27, 28), der fest mit dem Förderaggregat (4) verbunden und geeignet ist, das Förderaggregat (4) zu verfahren.

4. Plattenaufteilsäge nach Anspruch 3, **dadurch gekennzeichnet, dass** der Rahmen (7, 8, 9) mindestens eine erste und eine zweite Flanke (29, 30) umfasst, die parallel zueinander angeordnet sind und sich entlang der Zuführungsrichtung (X) erstrecken, wobei das Förderaggregat (4) einen Balken (31) umfasst, der von der ersten und der zweiten Flanke (29, 30) getragen wird, wobei der zweite Linearmotor (23, 24) zwischen der ersten Flanke (29, 30) und dem Balken (31) arbeitet und der zweite Stator (26, 27) fest mit der ersten Flanke (29, 30) verbunden ist und der zweite Läufer (27, 28) fest mit dem Balken (31) verbunden ist und der dritte Linearmotor (23, 24) zwischen der zweiten Flanke (29, 30) und dem Balken (31) arbeitet und der dritte Stator (25, 26) fest mit der zweiten Flanke (29, 30) verbunden ist und der dritte Läufer (27, 28) fest mit dem Balken (31) verbunden ist.

5. Plattenaufteilsäge nach Anspruch 4, **dadurch gekennzeichnet, dass** der Rahmen (7, 8, 9) mindestens eine erste und eine zweite Flanke (29, 30) umfasst, die parallel zueinander angeordnet sind und sich entlang der Zuführungsrichtung (X) erstrecken, einen ersten und einen zweiten Bügel (32, 33), die jeweils aus der ersten Flanke (29, 30) und der zweiten Flanke (29, 30) herausragen und sich entlang der Zuführungsrichtung (X) erstrecken, wobei das Förderaggregat (4) einen Balken (31) umfasst, der vom ersten und vom zweiten Bügel (32, 33) getragen wird, wobei der zweite Linearmotor (23, 24) zwischen dem ersten Bügel (32, 33) und dem Balken (31) arbeitet und der zweite Stator (25, 26) fest mit dem ersten Bügel (32, 33) verbunden ist und der zweite Läufer (27, 28) fest mit dem Balken (31) verbunden ist und der dritte Linearmotor (23, 24) zwischen dem zweiten Bügel (32, 33) und dem Balken (31) arbeitet und der dritte Stator (25, 26) fest mit dem zweiten Bügel (32, 33) verbunden ist und der dritte Läufer (27, 28) fest mit dem Balken (31) verbunden ist.

6. Plattenaufteilsäge nach Anspruch 5, **dadurch gekennzeichnet, dass** sie zweite Halterungs- und Führungsmittel (34) umfasst, die zwischen dem ersten und dem zweiten Bügel (32, 33) und dem Förderaggregat (4) arbeiten, wobei die zweiten Halterungs- und Führungsmittel (34) eine dritte prismatische Führung (35, 36) umfassen, die sich entlang der Führungsrichtung (X) erstreckt, und eine dritte Gleitkufe (37, 38), die fest mit dem Balken (31) verbunden und im Eingriff mit der dritten prismatischen Führung (35, 36) ist, wobei die dritte Führung (35, 36) und der zweite Stator (25, 26) vom ersten Bügel (32, 33) getragen werden und die zweiten Halterungs- und Führungsmittel (34) eine vierte prismatische Führung (35, 36) umfassen, die sich entlang der Zuführungsrichtung (X) erstreckt, und eine vierte Gleitkufe (37, 38), die fest mit dem Balken (31) verbunden und im Eingriff mit der vierten prismatischen Führung (35, 36) ist, wobei die vierte Führung (35, 36) und der dritte Stator (25, 26) vom zweiten Bügel (32, 33) getragen werden.

7. Plattenaufteilsäge nach Anspruch 6, **dadurch gekennzeichnet, dass** die dritte prismatische Führung (35, 36) und der zweite Stator (25, 26) an entgegen gesetzten Seiten des ersten Bügels (32, 33) positioniert sind und dass die vierte prismatische Führung (35, 36) und der dritte Stator (25, 26) an entgegengesetzten Seiten relativ zum zweiten Bügel (32, 33) positioniert sind.

8. Plattenaufteilsäge nach Anspruch 7, **dadurch gekennzeichnet, dass** das Förderaggregat (4) von den dritten und vierten Führungen (35, 36) getragen wird und auf diesen ruht.

## Revendications

1. Machine à scier destinée à couper des panneaux (2) comprenant une table de travail (3) servant à supporter les panneaux (2), une structure (7, 8, 9), une unité de déplacement (4) de panneaux (2) montée sur la structure (7, 8, 9) et mobile, pour déplacer les panneaux (2) sur la table de travail (3), entre une première position fonctionnelle et une seconde position fonctionnelle le long d'une direction d'alimentation (X), une unité de découpe (5) placée le long de la table de travail (3) et montée sur la structure (7, 8, 9), mobile, pour découper les panneaux (2), entre une première position fonctionnelle et une seconde position fonctionnelle le long d'une direction de découpe (Y) transversale à la direction d'alimentation (X), des moyens d'entraînement (10) servant à déplacer l'unité de découpe (5) entre les première et seconde positions fonctionnelles respectives et à déplacer l'unité de déplacement (4) entre les première et seconde positions fonctionnelles respectives, la machine à scier des panneaux étant **caractérisée en ce que** les moyens d'entraînement (10) comprennent au moins un moteur linéaire (12) servant à déplacer l'unité de découpe (5) entre les première et seconde positions fonctionnelles le long de la direction de découpe (Y), le moteur linéaire (12) comprenant un stator (13) solidaire de la structure (7, 8, 9) et se développant le long de la direction de découpe (Y) ainsi qu'un entraîneur correspondant (14) solidaire de l'unité de découpe (5), dans laquelle le stator (13) est défini par une pluralité d'aimants permanents (13a), dans laquelle les aimants (13a) sont alignés le long de la direction de découpe (Y) pour définir une piste d'aimants, la machine à scier des panneaux comprenant en outre des moyens de support et de guidage (15) fonctionnant entre la structure (7, 8, 9) et l'unité de découpe (5), l'unité de découpe (5) étant suspendue à la structure (7, 8, 9) par les moyens de support et de guidage (15), les moyens de support et de guidage (15) comprenant au moins un guidage prismatique (16, 17) se développant le long de la direction de découpe (Y), un patin (18, 19) solidaire de l'unité de découpe et se mettant en prise avec le guidage prismatique (16, 17), un second guidage prismatique (16, 17) parallèle au premier guidage prismatique (16, 17), et un second patin (18, 19) solidaire de l'unité de découpe (5) et se mettant en prise avec le second guidage prismatique (16, 17), l'entraîneur (14) étant positionné entre le premier et le second patin (18, 19), l'unité de découpe (5) comprend un chariot (20) mobile le long de la direction de découpe (Y) et comprenant une plaque horizontale (21) ayant une grande face (21a) se développant principalement le long de la direction d'alimentation (X) et de la direction de découpe (Y), les moyens de support et de guidage (15) fonctionnant entre la grande face (21a) et la structure (7, 8, 9), l'entraîneur (14) étant solidaire du chariot (20).

2. Machine à scier des panneaux selon la revendication 1, **caractérisée en ce qu'**elle comprend au moins un second moteur linéaire (23, 24) servant à déplacer l'unité de déplacement (4) entre les première et seconde positions fonctionnelles le long de la direction d'alimentation (X), le second moteur linéaire (23, 24) comprenant un second stator (25, 26) solidaire de la structure (7, 8, 9) et se développant le long de la direction d'alimentation (X), et un second entraîneur correspondant (27, 28) solidaire de l'unité de déplacement (4).

3. Machine à scier des panneaux selon la revendication 2, **caractérisée en ce que** les moyens d'entraînement (10) comprennent au moins un troisième moteur linéaire (23, 24) comprenant un troisième stator (25, 26), solidaire de la structure (7, 8, 9) et se développant le long de la direction d'alimentation (X), et un troisième entraîneur correspondant (27, 28) solidaire de l'unité de déplacement (4) et adapté pour déplacer l'unité de déplacement (4).

4. Machine à scier des panneaux selon la revendication 3, **caractérisée en ce que** la structure (7, 8, 9) comprend au moins un premier et un second flanc (29, 30) étant parallèles réciproquement et qui se développent le long de la direction d'alimentation (X), l'unité de déplacement (4) comprenant une poutre (31) supportée par les premier et second flancs (29, 30), le second moteur linéaire (23, 24) fonctionnant entre le premier flanc (29, 30) et la poutre (31), le second stator (26, 27) étant solidaire du premier flanc (29, 30) et le second entraîneur (27, 28) étant solidaire de la poutre (31), le troisième moteur linéaire (23, 24) fonctionnant entre le second flanc (29, 30) et la poutre (31), le troisième stator (25, 26) étant solidaire du second flanc (29, 30) et le troisième entraîneur (27, 28) étant solidaire de la poutre (31).

5. Machine à scier des panneaux selon la revendication 4, **caractérisée en ce que** la structure (7, 8, 9) comprend au moins un premier et un second flanc (29, 30) parallèles et se faisant face réciproquement et se développant le long de la direction d'alimentation (X), une première et une seconde console (32, 33) dépassant, respectivement, du premier flanc (29, 30) et du second flanc (29, 30) et se développant le long de la direction d'alimentation (X), l'unité de déplacement (4) comprenant une poutre (31) supportée par les première et seconde consoles (32, 33), le second moteur linéaire (23, 24) fonctionnant entre la première console (32, 33) et la poutre (31), le second stator (25, 26) étant solidaire de la première console (32, 33) et le second entraîneur (27, 28) étant solidaire de la poutre (31), le troisième moteur linéaire (23, 24) fonctionnant entre la seconde console (32, 33) et la poutre (31), le troisième stator (25, 26) étant solidaire de la seconde console (32, 33) et le troisième entraîneur (27, 28) étant solidaire de la poutre (31).

6. Machine à scier des panneaux selon la revendication 5, **caractérisée en ce qu'**elle comprend des seconds moyens de support et de guidage (34) fonctionnant entre les première et seconde consoles (32, 33) et l'unité de déplacement (4), les seconds moyens de support et de guidage (34) comprenant un troisième guidage prismatique (35, 36) se développant le long de la direction d'alimentation (X) et un troisième patin (37, 38) solidaire de la poutre (31) et se mettant en prise avec le troisième guidage prismatique (35, 36), le troisième guidage (35, 36) et le second stator (25, 26) étant supportés par la première console (32, 33), les seconds moyens de support et de guidage (34) comprenant un quatrième guidage prismatique (35, 36) se développant le long de la direction d'alimentation (X) et un quatrième patin (37, 38) solidaire de la poutre (31) et se mettant en prise avec le quatrième guidage prismatique (35, 36), le quatrième guidage (35, 36) et le troisième stator (25, 26) étant supportés par la seconde console (32, 33).

7. Machine à scier des panneaux selon la revendication 6, **caractérisée en ce que** le troisième guidage prismatique (35, 36) et le second stator (25, 26) sont positionnés sur des côtés opposés de la première console (32, 33) et **en ce que** le quatrième guidage prismatique (35, 36) et le troisième stator (25, 26) sont positionnés sur des côtés opposés par rapport à la seconde console (32, 33).

8. Machine à scier des panneaux selon la revendication 7, **caractérisée en ce que** l'unité de déplacement (4) est supportée par, et repose sur, les troisième et quatrième guidages (35, 36).
